# EUROPEAN PATENT APPLICATION

(11) **EP 2 228 929 A2**
(43) Date of publication of application: **15.09.2010**
(21) Application number: 10153020.2
(22) Date of filing: 09.02.2010
(51) Int. Cl.: H04J 3/16, H04J 3/14, H04L 12/40

(54) **Frame transfer device and frame transfer method**

(30) Priority: 12.03.2009 JP 2009059521
(71) Applicant: FUJITSU LIMITED, Kawasaki-shi, Kanagawa 211-8588 (JP)
(72) Inventor: Aoki, Yasuhiko, Kanagawa 211-8588 (JP); Honma, Hiroyuki, Kanagawa 211-8588 (JP); Takeuchi, Osamu, Kanagawa 211-8588 (JP)
(74) Representative: HOFFMANN EITLE

(57) **Abstract**

A frame transfer device includes a transfer portion that transfers a client signal in parallel with use of a plurality of lanes, a frame generation portion that is provided on each of the lanes and accommodates the client signal in an accommodation frame according to a bit rate of each of the lanes without multi distribution termination process to the client signal transferred from the transfer portion, and a multiplex transmission portion that multiplexes and transmits a plurality of frames generated by the frame generation portion.

## Description

### FIELD

A certain aspect of embodiments described herein relates to a frame transfer device and a frame transfer method.

### BACKGROUND

ITU-T standardizes an OTN (Optical Transport Network) frame of an optical communication system using WDM (Wavelength Division Multiplexing) technology. The OTN frame accommodates a variable client signal such as SDH/SONET or Ethernet, adds an overhead for monitoring control, an error correction code and so on, and generates a transfer frame. For example, Japanese Patent Application Publication No. 2007-96822 and Japanese Patent Application Publication No. 2008-113395 disclose an optical transmission system that accommodates a client signal in an OTU (Optical Transfer Unit) frame and transmits the accommodated client signal.

Recently, standardization of Ethernet having a bit rate such as 40 Gbps or 100 Gbps is reviewed as a next generation standard. The OTN requires an OTN frame having a bit rate such as 40 Gbps or 100 Gbps and a technology in which the OTN frame is transferred in the system, in order to accommodate and transfer these next generation Ethernet signal.

However, accommodation of the Ethernet signal in the OTN frame requires termination process of MLD (Multi Lane Distribution), transcoding process or the like. Therefore, process and circuit size may be enlarged.

### SUMMARY

The present invention has been made in view of those circumstances, and an object thereof is to provide a frame transfer device and a frame transfer method that restrain enlargement of process and circuit enlargement.

According to an aspect of the present invention, there is provided a frame transfer device including a transfer portion that transfers a client signal in parallel with use of a plurality of lanes, a frame generation portion that is provided on each of the lanes and accommodates the client signal in an accommodation frame according to a bit rate of each of the lanes without multi distribution termination process to the client signal transferred from the transfer portion, and a multiplex transmission portion that multiplexes and transmits a plurality of frames generated by the frame generation portion.

According to another aspect of the present invention, there is provided a frame transfer method including transferring a client signal in parallel with use of a plurality of lanes, accommodating the transferred client signal in an accommodation frame according to a bit rate of each of the plurality of lanes without multi distribution termination process to the client signal, and multiplexing and transmitting a plurality of frames generated in the accommodating of the transferred client signal.

The object and advantages of the invention will be realized and attained by means of the elements and combinations particularly pointed out in the claims.

It is to be understood that both the foregoing general description and the following detailed description are exemplary and explanatory and are not restrictive of the invention, as claimed.

### BRIEF DESCRIPTION OF DRAWINGS

FIG. 1 illustrates an optical transmission system including a frame transfer device in accordance with a first embodiment;
FIG. 2A and FIG. 2B illustrate an OTN frame format;
FIG. 3 illustrates a signal transfer mode of Ethernet;
FIG. 4 illustrates a block diagram of a communication device and an optical transmission device in accordance with the first embodiment;
FIG. 5 illustrates an OPU2e frame;
FIG. 6A and FIG. 6B illustrate an effect of the first embodiment;
FIG. 7 a block diagram of an optical transmission device and a communication device;
FIG. 8 illustrates details of error detection on each virtual lane;
FIG. 9A and FIG. 9B illustrate a case where a fault is occurred between a transmitter device Tx1 and a receiver device Rx1;
FIG. 10 illustrates a flowchart of fault detection of a case where a fault is occurred between a transmitter device Tx1 and a receiver device Rx1; and
FIG. 11 illustrates a block diagram of a communication device and an optical transmission device in accordance with a second embodiment.

### DESCRIPTION OF EMBODIMENTS

The following is a description of embodiments of the present invention, with reference to the accompanying drawings.

### [First Embodiment]

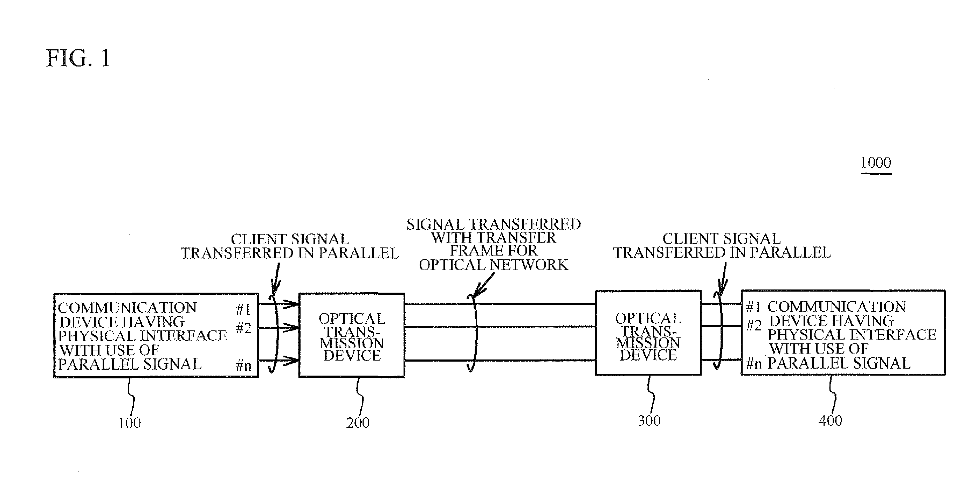

FIG. 1 illustrates an optical transmission system 1000 including a frame transfer device in accordance with a first embodiment. The optical transmission system 1000 makes an OTN transport. As illustrated in FIG. 1, the optical transmission system 1000 includes a communication device 100, an optical transmission device 200, an optical transmission device 300, and a communication device 400.

The communication device 100 has a physical interface treating a parallel signal. In the embodiment, the communication device 100 is a 40GbE optical receiver/transmitter device. The communication device 100 parallelizes a received client signal into lower-speed signals (#1 to #n in FIG. 1) and transfers the parallelized signals to the optical transmission device 200. The optical transmission device 200 transfers a frame including an overhead for monitoring control, an error correction code and so on. In the embodiment, the optical transmission device 200 is an OTU3 transponder. A frame for optical network accommodating an optical signal is transferred to the optical transmission device 300 from the optical transmission device 200.

The optical transmission device 300 has the same structure as the optical transmission device 200. In the embodiment, the optical transmission device 300 is an OTU3 transponder. The optical transmission device 300 extracts a client signal from a frame transferred from the optical transmission device 200 and transfers the extracted client signal to the communication device 400 in parallel (#1 to #n in FIG. 1). The communication device 400 has a physical interface treating a parallel signal. The communication device 400 multiplexes the client signal received from the optical transmission device 300 and transmits the multiplexed client signal to an external device.

The optical transmission system 1000 can transmit a client signal in an opposite direction. In concrete, the communication device 400 parallelizes a received client signal and transfers the parallelized client signal to the optical transmission device 300. The optical transmission device 300 transfers a frame accommodating the client signal to the optical transmission device 200. The optical transmission device 200 extracts the client signal from the frame and transfers the extracted client signal to the communication device 100 in parallel. The communication device 100 multiplexes the received client signal and transmits the multiplexed signal to an external device.

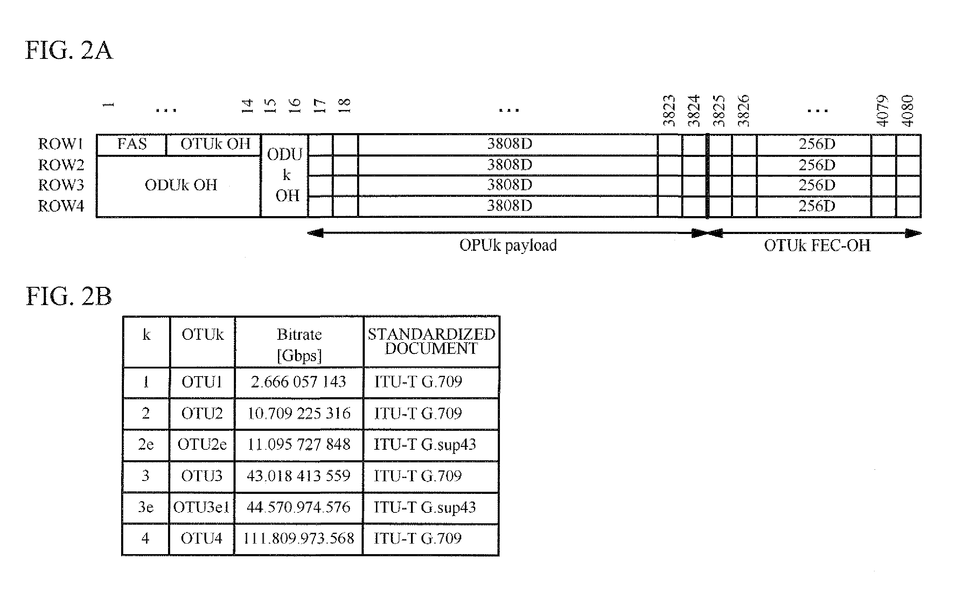

Next, a description will be given of an OTN frame accommodating a client signal. FIG. 2A illustrates a format of the OTN frame. As illustrated in FIG. 2A, the OTN frame includes an overhead area, an OPUk (Optical channel Payload Unit) payload area, and an OTUkFEC (Optical channel Transport Unit Forward Error Correction) overhead area.

The overhead area has a frame size of 16 byte from first column to 16th column X 4 rows, and is used for management for a connection and an administration of quality. The OPUk payload area has a frame size of 3808 bytes from 17th column to 3824th column X 4 rows, and accommodates a client signal providing more than one service. The OTUkFEC overhead area has a frame size of 256 bytes from 3825th column to 4080th column X 4 rows, and is used for correction of an error of transmission.

The OPUk payload area, to which an overhead byte used for management for connection and administration of quality is added, is referred to as an ODUk (Optical channel Data Unit) area. The ODUk area, to which an overhead byte used for frame synchronization, connection and administration of quality and the OTUkFEC overhead are added, is referred to as an OTUk (Optical channel Transport Unit) area. FIG. 2B illustrates a bit rate of each OTN frame.

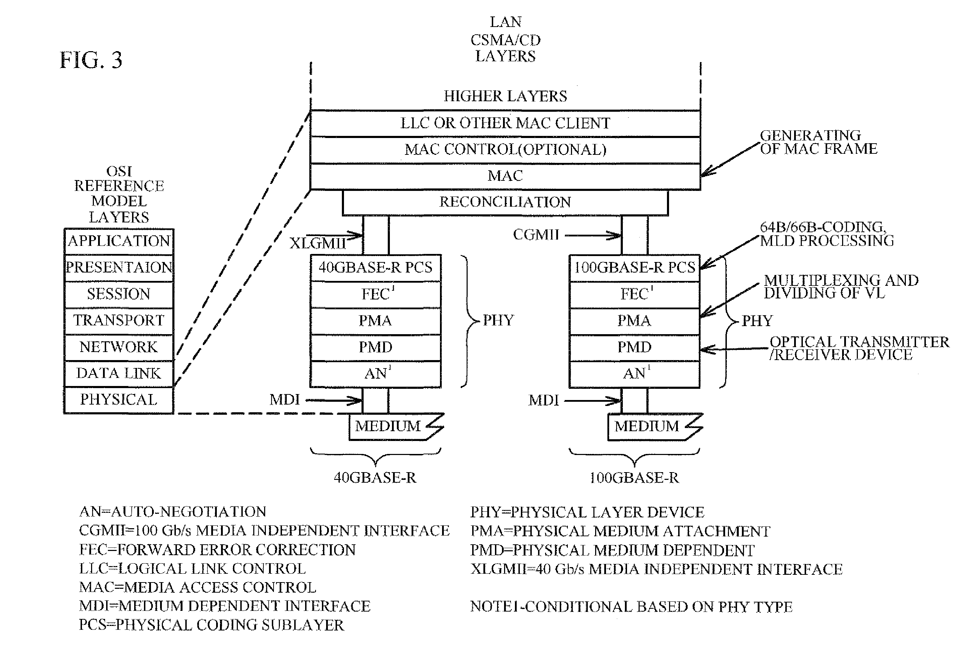

Next, a description will be given of a data transfer process of Ethernet. FIG. 3 illustrates a signal transfer mode of the Ethernet. A MAC (Media Access Control) layer accommodates a signal from a higher layer in a frame of the Ethernet. The accommodated signal is 64B66B-coded at a PCS (Physical Coding Sub-layer) and is distributed into serial signal lane named VL (Virtual Lane) by 66B in order to transfer the coded signal with use of serial signals pseudoly. After that, each serial signal is multiplexed according to number of the optical transmission device and is transmitted.

With respect to a signal received by an optical receiver device from the VLs, a receiver device corrects a skew generated in a transmission path, identifies with respect to a lane replacement, and re-generates a MAC frame.

ITU-T standardizes the OTN that transfers such as 40GbE (signal speed: 41.25 Gbps) or 100GbE (signal speed: 103.125 Gbps). For example, it is thought that 40GbE may be adapted to OPU/ODU/OTU3 bit rate (OPU: 40.150 Gbps). In concrete, it is thought that the 40GbE signal is converted into 1024/1027B signal in which 64B66B-coded 66 bit data is edited and combined, and is accommodated in an OTN frame. The same may be applied to the 100GbE.

These processes require a function such as termination process of MLD or transcoding process. This may result in enlargement of process and circuit size. Similarly, the transferring of the 100GbE requires the termination process of MLD.

For example, a client with a serial signal is defined in a Virtual Concatenation technology in which plural OPU frames are connected and a large size frame is generated pseudoly. In the technology, a frame having a size of multiplexed frames is generated by combining each OPU frame once. However, in this case, signals distributed to plural lanes are multiplexed into a single large frame. After that, the large frame is distributed into signals of each frame again. Therefore, parallelizing process and combining process get redundant.

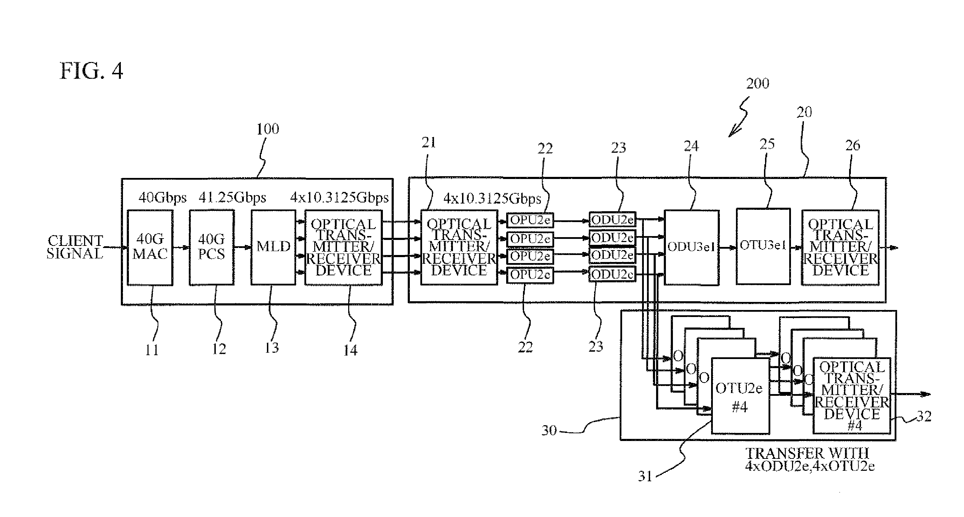

And so, a description will be given of accommodation of a client signal distributed to plural lanes with respect to the 40GbE in the embodiment. FIG. 4 illustrates a block diagram of the communication device 100 and the optical transmission device 200 in accordance with the first embodiment. The communication device 100 is a 40GbE optical transmitter/receiver device and includes a MAC portion 11, a PCS portion 12, a MLD portion 13 and an optical transmitter/receiver device 14.

The optical transmission device 200 includes a transponder 20 or a transponder 30. The transponder 20 includes an optical transmitter/receiver device 21, an OPU process portion 22, an ODU process portion 23, an ODU process portion 24, an OTU process portion 25 and an optical transmitter/receiver device 26. The transponder 30 includes an OTU process portion 31 and an optical transmitter/receiver device 32.

The 40GbE signal fed into the communication device 100 is accommodated in an Ethernet frame at the MAC portion 11. The signal accommodated in the Ethernet frame is 64B66B-coded (41.25 Gbps) at the PCS portion 12 and is parallelized into four serial signals (4 X 10.3125 Gbps) by 66B at the MLD portion 13. Each parallelized serial signal is fed into the optical transmitter/receiver device 14 via four virtual lanes. The optical transmitter/receiver device 14 transmits the serial signals to the transponder 20 via each virtual lane without multiplexing the serial signals.

The transponder 20 receives each serial signal at the optical transmitter/receiver device 21. The optical transmitter/receiver device 21 acts as a transfer portion transferring the client signal in parallel with use of the virtual lanes, and transfers the received serial signal to the OPU process portion 22 via each virtual lane.

Each virtual lane includes the OPU process portion 22 and the ODU process portion 23. The OPU process portion 22 and the ODU process portion 23 act as a frame generation portion that accommodates each signal in an accommodation frame according to the bit rate of each virtual lane without the MLD processing. In the embodiment, four OPU process portions 22 and four ODU process portions 23 are provided. In concrete, each of the OPU process portions 22 accommodates the signal in the accommodation frame having the bit rate higher than that of each lane. In the embodiment, the OPU process portion 22 accommodates each serial signal in an OPU2e frame (10.356 Gbps). Each of the ODU process portions 23 adds ODU OH to the OPU2e frame and generates an ODU2e frame.

The ODU process portion 24 acts as a multiplexing transmitter that multiplexes plural frames and transmits the multiplexed frames. In the embodiment, the ODU process portion 24 multiplexes four ODU2e frames into a frame having ODU3e1 (41.774 Gbps) size. The OTU process portion 25 converts the frame received from the ODU process portion 24 into an OTU3e1 (44.570Gbps) and transfers the OTU3e1 frame. The optical transmitter/receiver device 26 transmits the transferred frame. Alternatively, the OTU process portion 31 of the transponder 30 converts ODU2e frames into 4 X OTU2e. The optical transmitter/receiver device 32 transmits the 4 X OTU2e with spatial multiplexing technology (parallel optical fibers) or wavelength division multiplexing technology.

The optical transmission device 300 terminates the overhead of the transferred OTU3e1 frame or the transferred 4 X OTU2e frame in order of the OTU, ODU and OPU, and transmits a signal of 4 X 10.3125 Gbps to an Ethernet receiver device. The communication device 400 adjusts the skew between the virtual lanes at the MLD termination portion, and re-generates the MAC frame.

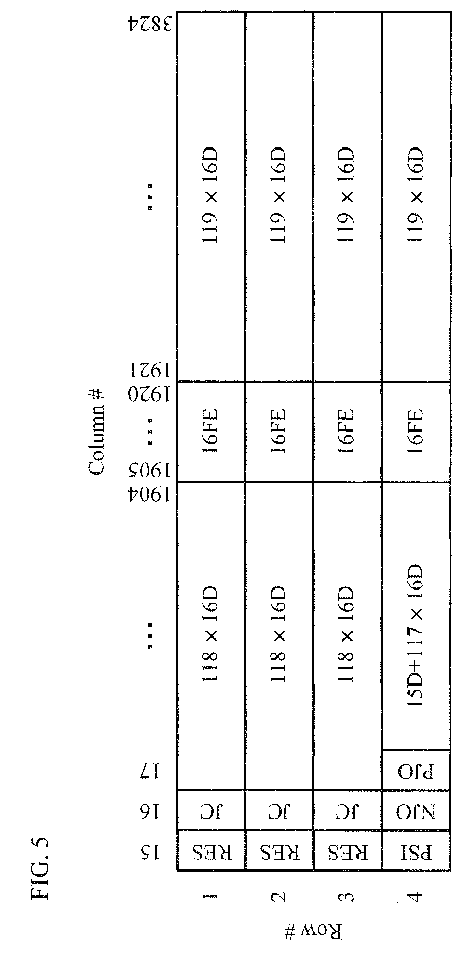

FIG. 5 illustrates the OPU2e frame. As illustrated in FIG. 5, the OPU2e frame is defined in order to accommodate and transfer a client signal having frequency fluctuation of 10.3125 Gbps plus minus 100 ppm. The OPU2e frame can transfer a CBR signal transparently. Therefore, unnecessary termination process may be avoided.

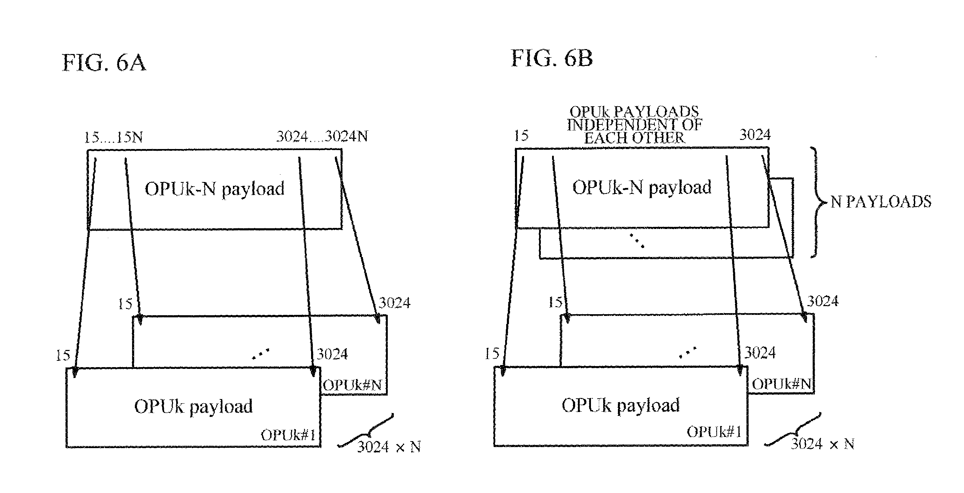

FIG. 6A and FIG. 6B illustrate an effect of the embodiment. FIG. 6A illustrates a case where the optical transmission device 200 transmits the frame to the optical transmission device 300 in parallel with use of a Virtual Concatenation technology. FIG. 6B illustrates a case where the optical transmission device 200 transmits the frame to the optical transmission device 300 in parallel with use of the embodiment.

As illustrated in FIG. 6A, OPUk-Nv can be generated by generating a N times payload as much as the OPUk and dividing the payload by one byte, when a client signal is transferred in parallel with use of Virtual Concatenation technology. The client signal can be extracted by aligning the divided payload properly with respect to time and assembling by one byte. In this case, the payload may be enlarged. Therefore, process and circuit size may be enlarged.

As illustrated in FIG. 6B, it is possible to generate OPUk payloads that are independent of each other and generate the OPUk-Nv without multiplexing when the client signal distributed to plural virtual lanes is transferred in parallel without MLD termination. The OPUk-Nv may be treated as an OPUk payload if the OPUk-Nv is aligned in time order (TDM), in space order (parallel), or in wavelength order. In this case, enlargement of the payload area is restrained. Therefore, the process and the circuit size are restrained.

As mentioned above, the 40GbE can be accommodated in a signal having a lower speed such as 10 Gbps efficiently in the embodiment. Therefore, MLD termination processing such as MLD termination processing or transcoding processing at an electrical circuit is not required. And, common use of an optical module may reduce cost, because an optical module of the Ethernet developed for plural virtual lanes can be used. Further, 100% throughput may be obtained if the transponder 30 is used.

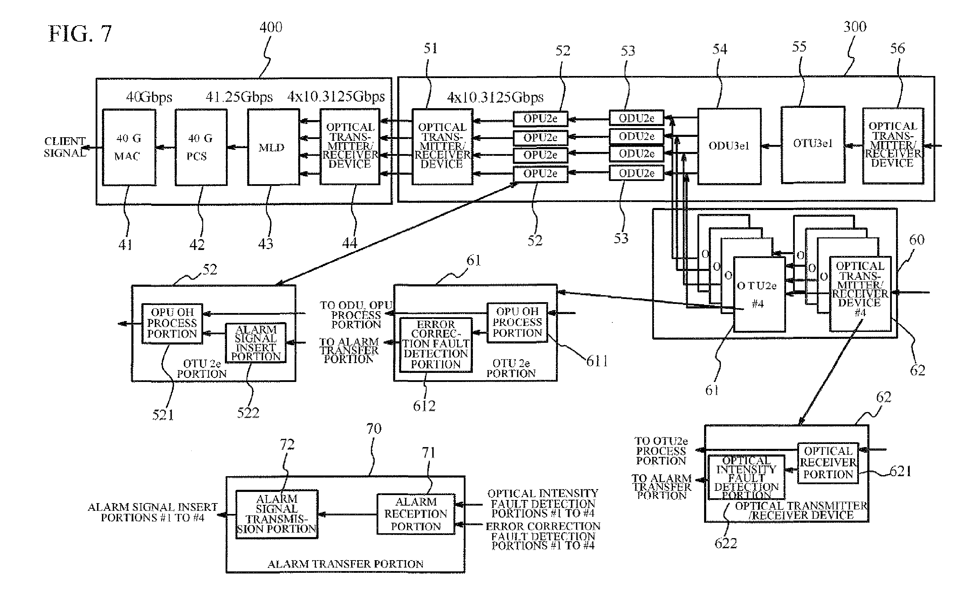

Next, a description will be given of a fault detection in an optical transmission device on the receiver side. FIG. 7 illustrates a block diagram of a receiver component of the optical transmission device 300 and the communication device 400. The communication device 400 is a 40GbE optical transmitter/receiver device, and includes a MAC portion 41, a PCS portion 42, a MLD portion 43, and an optical transmitter/receiver device 44.

The optical transmission device 300 includes a transponder 50, a transponder 60, and an alarm transfer portion 70. The transponder 50 includes an optical transmitter/receiver device 51, an OPU process portion 52, an ODU process portion 53, an ODU process portion 54, an OTU process portion 55, and an optical transmitter/receiver portion 56. The transponder 60 includes an OTU process portion 61 and an optical transmitter/receiver device 62.

The OTU process portion 55 extracts an ODU3el frame from an OTU3e1 frame received from the optical transmitter/receiver portion 56, and transfers the extracted frame to the ODU process portion 54. The ODU process portion 54 extracts four ODU2e frames from the received ODU3e1 frame and transfers the extracted frames to each ODU process portion 53 via four virtual lanes. Each ODU process portion 53 extracts an OPU2e frame from the received ODU2e frame and transfers the extracted frame to each OPU process portion 52. Each OPU process portion 52 extracts a serial signal from the received OPU2 frame and transfers the extracted signal to the optical transmitter/receiver device 51.

The OTU process portion 61 includes an OTU OH process portion 611 and an error-correction-fault detection portion 612. The optical transmitter/receiver device 62 includes an optical receiver portion 621 and an optical-intensity-fault detection portion 622. The alarm transfer portion 70 includes an alarm receiver portion 71 and an alarm-signal transmitter portion 72. The OPU process portion 52 includes an OPU OH process portion 52 and an alarm-signal insert portion 522.

The error-correction-fault detection portion 612 transfers an alarm signal relating to an error-correction-fault to the alarm transfer portion 70 when detecting a fault in an error-correction. The optical-intensity-fault detection portion 622 transfers an alarm signal relating to an optical-intensity-fault to the alarm transfer portion 70 when detecting a fault in an optical-intensity.

When the alarm receiver portion 71 receives an alarm signal relating to the optical-intensity-fault or an alarm signal relating to the error-correction-fault, the alarm-signal transmitter portion 72 transfers these alarm signals to the alarm-signal insert portion 522. When the alarm-signal insert portion 522 receives an alarm signal, the alarm-signal insert portion 522 transfers the alarm signal to the OPU OH process portion 521. The OPU OH process portion 521 transfers the alarm signal to the optical transmitter/receiver device 51. With the structure, a fault may be detected on each virtual lane. A description will be given of the details.

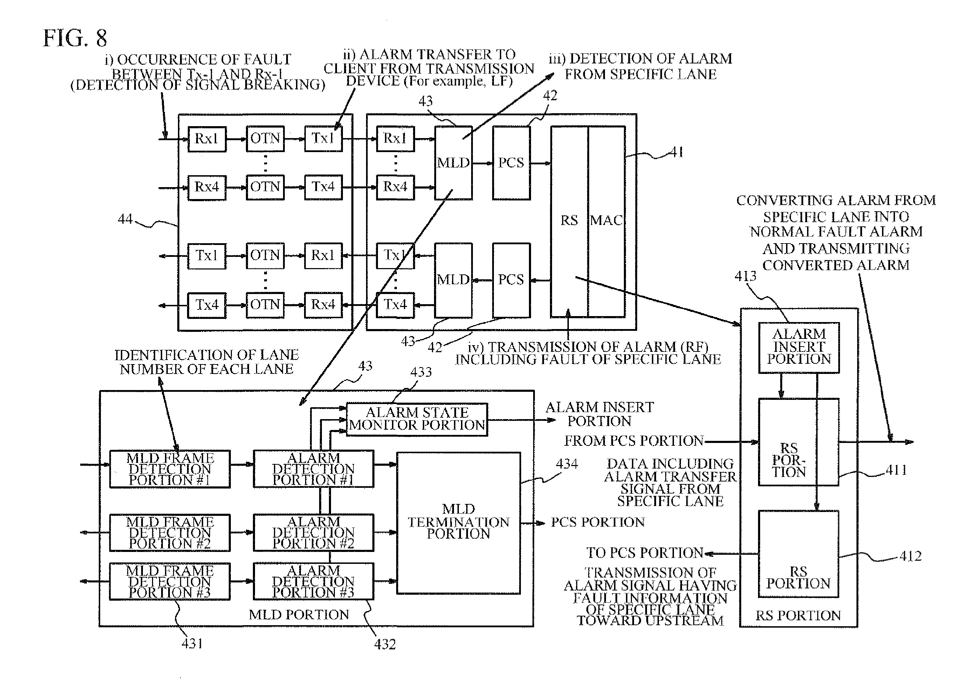

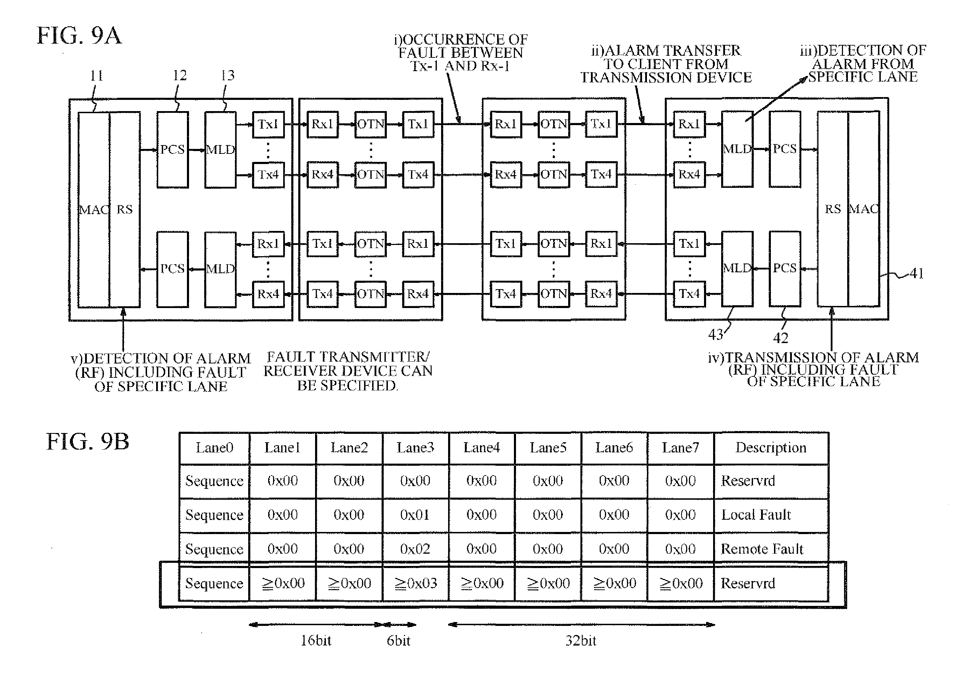

FIG. 8, FIG. 9A and FIG. 9B illustrate the details of error detection on each virtual lane. As illustrated in FIG. 8, the optical transmitter/receiver device 44 includes receiver devices Rx1 to Rx4, a device OTN acting as an OTU process portion, an ODU process portion and an OPU process portion, and transmitter devices Tx1 to Tx4 on the receiver device side. The optical transmitter/receiver device 44 includes receiver devices Rx1 to Rx4, a device OTN acting as an OTU process portion, an ODU process portion and an OPU process portion, and transmitter devices Tx1 to Tx4 on the transmitter device side. The numerals Rx1 to Rx4 and Tx1 to Tx4 indicate virtual lane number of receiver side and transmitter side respectively.

The MLD portion 43 on the receiver device side includes an alarm-state monitor portion 433 and a MLD termination portion 434, and includes a MLD frame detection portion 431 and an alarm detection portion 432 on each virtual lane. The MLD frame detection portion 431 identifies the lane number of each virtual lane. The alarm detection portion 432 detects whether an alarm signal is inserted in a signal transferred via each virtual lane. With the structure, an alarm signal may be detected on every virtual lane.

The MAC portion 41 includes a receiver-side RS (Reconciliation Sub-layer) portion 411, a transmitter-side RS portion 412 and an alarm-insert portion 413. As illustrated in FIG. 9A, a LF (Local Fault) signal is detected only on a virtual lane 1 when a fault is occurred between the transmitter device Tx 1 of the optical transmitter/receiver device 51 and the receiver device Rx1 of the optical transmitter/receiver device 44. When a normal data is transferred on the virtual lanes other than the virtual lane 1, the MLD portion 43 detects the LF signal only on the virtual lane 1. It is therefore possible to specify a virtual lane on which a fault is occurred.

After that, the transmitter-side RS portion 412 inserts a fault-lane-information into a transferred signal with use of Reserved signal of Order Set used for defined alarm transfer when transmitting RF (Remote Fault) signal toward upstream side. It is therefore possible to determine a fault point in plural transmitter/receiver devices. FIG. 9B illustrates an example of the Reserved signal.

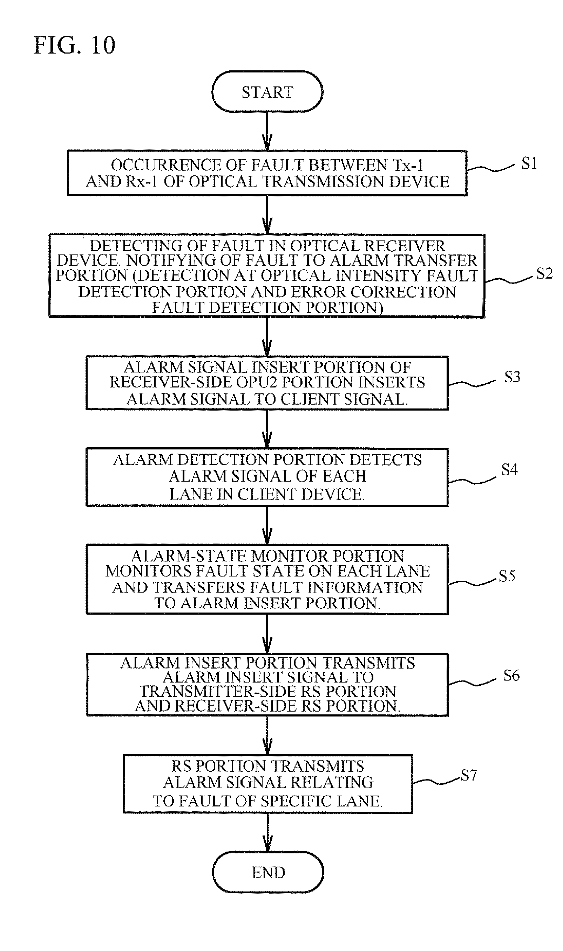

FIG. 10 illustrates a flowchart of fault detection of a case where a fault is occurred between the transmitter device Tx1 of the optical transmitter/receiver device 51 and the receiver device Rx1 of the optical transmitter/receiver device 44. As illustrated in FIG. 10, it is granted that a fault is occurred between the transmitter device Tx1 and the receiver device Rx1 (Step S1). In this case, the optical-intensity-fault detection portion 622 and the error-correction-fault detection portion 612 detect the fault and notify the detection to the alarm transfer portion 70 (Step S2).

Next, the alarm-signal insert portion 522 inserts an alarm signal into a client signal (Step S3). Then, the alarm detection portion 432 of each virtual lane detects the alarm signal (Step S4). Next, the alarm-state monitor portion 433 monitors the fault state of each virtual lane and transfers the fault information to the alarm-insert portion 413 (Step S5). Next, the alarm-insert portion 413 transmits the alarm insert signal to the receiver-side RS portion 411 and to the transmitter-side RS portion 412. Then, the receiver-side RS portion 411 and the transmitter-side RS portion 412 transmit the alarm signal relating to the virtual lane having the fault (Step S7). With the processes, the flowchart is terminated. With the flowchart of FIG. 10, a fault is detected on each virtual lane.

### [Second Embodiment]

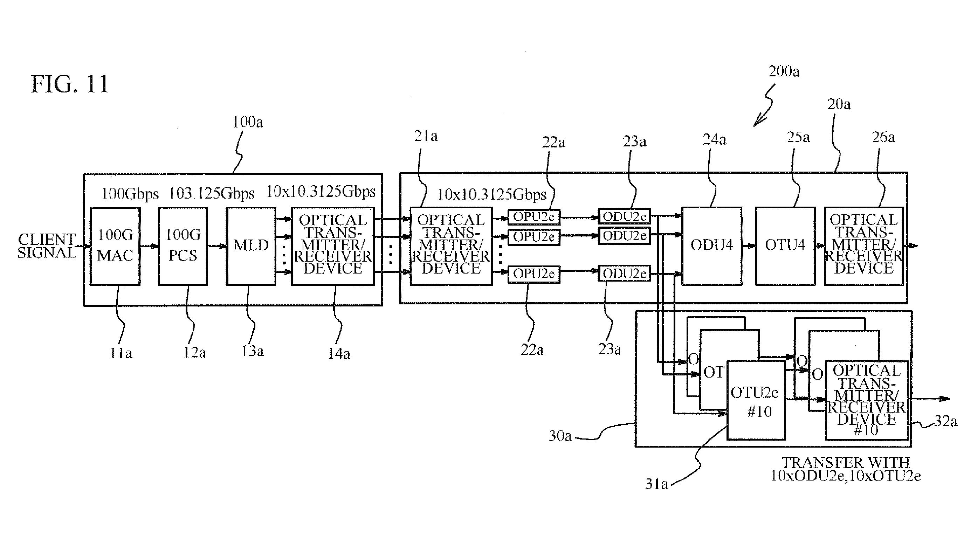

In a second embodiment, a description will be given of an accommodation of a client signal of 100GbE distributed to plural virtual lanes. FIG. 11 illustrates a communication device 100a and an optical transmission device 200a in accordance with the second embodiment. The communication device 100a is a 100GbE optical transmitter/receiver device and includes a MAC portion 11a, a PCS portion 12a, a MLD portion 13a and an optical transmitter/receiver device 14a.

The optical transmission device 200a includes a transponder 20a or a transponder 30a. The transponder 20a includes an optical transmitter/receiver device 21a, an OPU process portion 22a, an ODU process portion 23a, an ODU process portion 24a, an OTU process portion 25a and an optical transmitter/receiver device 26a. The transponder 30a includes an OTU process portion 31a and an optical transmitter/receiver device 32a.

The MAC portion 11a accommodates 100 Gbps signal fed into the communication device 100a in an Ethernet frame. The signal accommodated in the Ethernet frame is 64B66B-coded (103.125 Gbps) at the PCS portion 12a and is parallelized into ten serial signals (10 X 10.3125 Gbps) by 66B at the MLD portion 13a. Each parallelized serial signal is fed into the optical transmitter/receiver device 14a. The optical transmitter/receiver device 14a transmits the serial signals to the transponder 20a.

The transponder 20a receives each serial signal at the optical transmitter/receiver device 21a. In the embodiment, ten OPU process portions 22a and ten ODU process portions 23a are provided. Each of the OPU process portions 22a accommodates each serial signal in an OPU2e frame (10.356 Gbps). Each of the ODU process portions 23a adds ODU OH to the OPU2e frame and generates an ODU2e frame (10.399Gbps). The ODU process portion 24a multiplexes ten ODU2e frames into a frame having ODU4 (107.794 Gbps) size.

The OTU process portion 25a transfers the frame received from the ODU process portion 24a as an OTU4 (111.809 Gbps). The optical transmitter/receiver device 26a transmits the transferred frame. Alternatively, the OTU process portion 31a of the transponder 30a converts ODU2e frames into 10 X OTU2e. The optical transmitter/receiver device 32a transmits the 10 X OTU2e with spatial multiplexing technology (parallel optical fibers) or wavelength multiplexing technology.

A receiver-side optical transmission device terminates the overhead of the transferred OTU4 or the transferred 10 X OTU2e in order of the OTU, ODU and OPU, and transmits a signal of 10 X 10.3125 Gbps to an Ethernet receiver device. A communication device adjusts the skew between the virtual lanes at the MLD termination portion, and regenerates the MAC frame.

In the embodiment, the 100GbE is accommodated in a signal having a lower speed such as 10 Gbps. Therefore, MLD termination processing at an electrical circuit is not required. And, common use of an optical module may reduce cost, because an optical module of the Ethernet developed for plural virtual lanes can be used. Further, 100% throughput may be obtained if the transponder 30a is used.

The above-mentioned embodiments may be adapted to another client signal other than 40GbE or 100GbE. For example, process and circuit size may be reduced when a client signal having transfer speed of 400 Gbps is accommodated in 10 Gbps X 40 VL.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various change, substitutions, and alterations could be made hereto without departing from the spirit and scope of the invention.

## Claims

1. A frame transfer device comprising:
a transfer portion that transfers a client signal in parallel with use of a plurality of lanes;
a frame generation portion that is provided on each of the lanes and accommodates the client signal in an accommodation frame according to a bit rate of each of the lanes without multi distribution termination process to the client signal transferred from the transfer portion; and
a multiplex transmission portion that multiplexes and transmits a plurality of frames generated by the frame generation portion.

2. The frame transfer device as claimed in claim 1, further comprising:
a fault detection portion that detects fault occurrence on each of the plurality of lanes; and
an alarm insert portion that inserts an alarm signal relating to the lane, of which fault occurrence is detected by the fault detection portion, to the client signal.

3. The frame transfer device as claimed in claim 2, wherein the fault detection portion detects optical-intensity-fault or error-correction-fault on each of the plurality of lanes.

4. The frame transfer device as claimed in claim 1, wherein:
the client signal is 40GbE signal; and
the transfer portion transfers the client signal in parallel with use of four lanes.

5. The frame transfer device as claimed in claim 1, wherein:
the client signal is 100GbE signal; and
the transfer portion transfers the client signal in parallel with use of ten lanes.

6. A frame transfer method comprising:
transferring a client signal in parallel with use of a plurality of lanes;
accommodating the transferred client signal in an accommodation frame according to a bit rate of each of the plurality of lanes without multi distribution termination process to the client signal; and
multiplexing and transmitting a plurality of frames generated in the accommodating of the transferred client signal.

7. The frame transfer method as claimed in claim 6, further comprising:
detecting fault occurrence on each of the plurality of lanes; and
inserting an alarm signal relating to the lane, of which fault occurrence is detected in the detecting of the fault occurrence, to the client signal.

8. The frame transfer method as claimed in claim 7, wherein optical-intensity-fault or error-correction-fault of each of the plurality of lanes is detected in the detecting of the fault occurrence.

9. The frame transfer method as claimed in claim 6, wherein:
the client signal is 40GbE signal; and
the client signal is transferred in parallel with use of four lanes in the transferring of the client signal.

10. The frame transfer method as claimed in claim 6, wherein:
the client signal is 100GbE signal; and
the client signal is transferred in parallel with use of ten lanes in the transferring of the client signal.
